# DEMANDE DE BREVET EUROPEEN

(11) **EP 1 168 772 A1**
(43) Date de publication de la demande: **02.01.2002**
(21) Numéro de dépôt: 01401673.7
(22) Date de dépôt: 25.06.2001
(51) Int. Cl.: H04L 29/08, H04M 1/725, H04M 1/247

(54) **Procédé de gestion du fonctionnement d'un terminal mobile dans un reseau de telecommunication**

(30) Priorité: 30.06.2000 FR 0008492
(71) Demandeur: ALCATEL, 75008 Paris (FR)
(72) Inventeur: Sykes, Francis, 75014 Paris (FR); Aidan, Bruno, 75011 (FR)
(74) Mandataire: Fournier, Michel

(57) **Abrégé**

Ce procédé de gestion du fonctionnement d'un terminal mobile dans un réseau de télécommunication est du type dans lequel le terminal mobile est destiné à fonctionner sélectivement dans un mode appel téléphonique et dans un mode navigateur. Des moyens d'affichage, portés par le terminal mobile ou raccordés à ce terminal mobile, sont susceptibles d'afficher une page de données de service mise en forme par une séquence d'instructions dans un langage adapté aux données de service. La page de données de service donne accès à au moins un service. Selon ce procédé, on sélectionne un mode de fonctionnement du terminal mobile, dit mode préférentiel, pour la mise en oeuvre d'un service, en incorporant, dans la séquence d'instructions de la page de données de service donnant accès à ce service, une instruction de sélection du mode préférentiel. De préférence, le mode navigateur utilise le protocole d'application sans fil WAP (Wireless Application Protocol) et le langage adapté aux données de service est de la famille du langage XML (eXtensible Markup Language), notamment le langage WML (Wireless Markup Language). En variante, le langage adapté aux données de service peut être le langage HTML (Hyper Text Markup Language) ou un langage dérivé de ce dernier.

## Description

La présente invention concerne un procédé de gestion du fonctionnement d'un terminal mobile dans un réseau de télécommunication.

On connaît déjà dans l'état de la technique un procédé de gestion du fonctionnement d'un terminal mobile dans un réseau de télécommunication, du type dans lequel le terminal mobile est destiné à fonctionner sélectivement dans un mode appel téléphonique et dans un mode navigateur, et du type dans lequel des moyens d'affichage, portés par le terminal mobile ou raccordés à ce terminal mobile, sont susceptibles d'afficher une page de données de service mise en forme par une séquence d'instructions dans un langage adapté aux données de service, la page de données de service donnant accès à au moins un service.

De façon classique, dans un réseau de téléphonie mobile, le protocole d'application sans fil WAP (Wireless Application Protocol) permet à un terminal mobile d'échanger des données avec un réseau de type internet (technologie IP) ou un réseau intranet. Le langage adapté aux données de service et adapté aux terminaux mobiles est habituellement le WML (Wireless Markup Language). Ce langage est adapté aux moyens d'affichage limités d'un terminal mobile (écran de faible dimension généralement monochrome) et aux moyens d'interactivité limités entre un utilisateur et les moyens d'affichage du terminal mobile (clavier simplifié, flèches ou molette).

Habituellement, l'opérateur exploitant un réseau de téléphonie mobile gère un ordinateur ou « passerelle WAP » assurant la traduction entre, d'une part, le protocole de transmission HTTP (Hyper Text Transfert Protocol) et le protocole de sécurité TLS (Transport Layer Security) adaptés au réseau internet, et d'autre part, ses homologues adaptés au standard WAP, à savoir les protocoles de transmission WSP (Wireless Session Protocol), WTP (Wireless Transaction Protocol) et le protocole de sécurité WTLS (Wireless Transport Layer Security). La passerelle WAP permet donc une conversion de données entre le réseau de téléphonie mobile exploité par l'opérateur et le réseau internet. L'opérateur gérant la passerelle WAP peut ainsi offrir à ses abonnés un « portail WAP » par l'intermédiaire duquel sont proposés différents services.

Généralement, lorsqu'un abonné se connecte au portail WAP (le terminal mobile fonctionne alors en mode navigateur), les différents services proposés par l'opérateur sont accessibles par l'intermédiaire de fonctions affichées sur l'écran du terminal mobile. La sélection d'un service est réalisée habituellement au moyen de touches, de boutons fléchés, d'un navigateur à flèche, d'une molette, etc. du clavier. L'accès au service sélectionné est réalisé habituellement au moyen d'un bouton de validation du clavier. Toutefois, pour faire fonctionner le terminal mobile en mode appel téléphonique, l'utilisateur doit quitter le mode navigateur et donc sortir du mode WAP.

On évoquera ci-dessous un exemple de fonctionnement classique du terminal mobile en mode navigateur.

Un abonné, possédant une messagerie vocale, consulte en mode navigateur un service de gestion de cette messagerie accessible par le portail WAP de l'opérateur. Une page de données de service s'affiche alors par exemple sous la forme suivante :

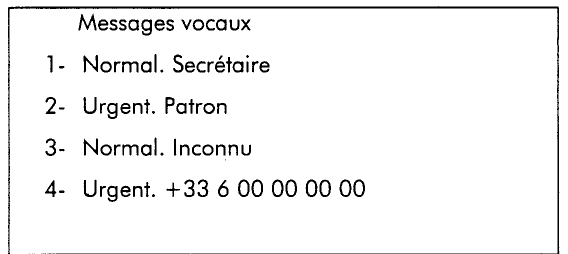

L'abonné choisi l'option « 2- Urgent. Patron » afin d'écouter le message correspondant ce qui a pour effet classiquement de configurer le terminal mobile en mode appel téléphonique. L'abonné ne peut alors plus accéder aux autres options proposées par la page de données de service ci-dessus sauf en quittant le mode appel téléphonique et en revenant au mode navigateur. On notera que dans certains cas l'appel en mode appel téléphonique marque l'aboutissement de la navigation.

L'invention a pour but d'imposer à un terminal mobile de réseau de télécommunication un mode de fonctionnement toujours adapté au service en cours en évitant des changements fastidieux entre les modes de fonctionnement « appel téléphonique » et « navigateur » du terminal mobile.

A cet effet, l'invention a pour objet un procédé de gestion du fonctionnement d'un terminal mobile dans un réseau de télécommunication, du type précité, caractérisé en ce que l'on sélectionne un mode de fonctionnement du terminal mobile, dit mode préférentiel, pour la mise en oeuvre d'un service, en incorporant, dans la séquence d'instructions de la page de données de service donnant accès à ce service, une instruction de sélection du mode préférentiel.

Suivant d'autres caractéristiques de ce procédé:
- le mode navigateur utilise le protocole d'application sans fil WAP (Wireless Application Protocol) ;
- le langage adapté aux données de service est de la famille du langage XML (eXtensible Markup Language), notamment le langage WML (Wireless Markup Language) ;
- le langage adapté aux données de service est le langage HTML (Hyper Text Markup Language) ou un langage dérivé de ce dernier.

L'invention sera mieux comprise à la lecture de la description qui va suivre, donnée uniquement à titre d'exemple.

On considère un terminal mobile de réseau de télécommunication destiné à fonctionner sélectivement dans un mode appel téléphonique et dans un mode navigateur. Ce terminal mobile comprend des moyens classiques formant interface homme-machine. Ces moyens d'interface sont portés par le terminal mobile ou réunis dans une unité séparée connectée au terminal mobile. Le mode appel téléphonique correspond à un fonctionnement du terminal mobile permettant la transmission de la voix entre ce terminal et le réseau de télécommunication, et donc à un fonctionnement de l'interface homme-machine propre à un usage téléphonique (indication de la durée d'appel, du numéro du correspondant, accès aux fonctions « raccrocher », « composer », etc.). Le mode navigateur correspond à un fonctionnement du terminal mobile permettant d'échanger des données avec un réseau de type internet ou le cas échéant un réseau intranet, et donc à un fonctionnement de l'interface homme-machine propre à un usage de navigation (affichage de données et de fonctions de navigation associées à des services en ligne).

De façon classique, le terminal mobile comprend un écran formant des moyens d'affichage de l'interface homme-machine susceptibles d'afficher une page de données de service mise en forme de façon connue en soi par une séquence d'instructions dans un langage adapté aux données de service. La page de données de service donne accès à au moins un service.

On notera que les moyens d'affichage peuvent être portés par le terminal mobile ou raccordés à ce terminal mobile.

De préférence, le mode navigateur utilise le protocole d'application sans fil WAP (Wireless Application Protocol) et le langage adapté aux données de service est de la famille du langage XML (eXtensible Markup Language), notamment le langage WML (Wireless Markup Language). En variante, le langage adapté aux données de service peut être le langage HTML (Hyper Text Markup Language) ou un langage dérivé de ce dernier.

Selon ce procédé, on sélectionne un mode de fonctionnement du terminal mobile, dit mode préférentiel, pour la mise en oeuvre d'un service, en incorporant, dans la séquence d'instructions de la page de données de service donnant accès à ce service, une instruction de sélection du mode préférentiel.

On peut ainsi définir en langage WML une instruction de sélection du mode navigateur : <type 1> et une instruction de sélection du mode appel téléphonique : <type 2>.

La séquence d'instructions d'une page de données de service comportant une instruction de sélection du mode navigateur se présente donc sous la forme suivante : 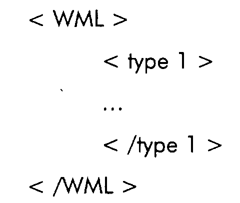 et la séquence d'instructions d'une page de données de service comportant une instruction de sélection du mode appel téléphonique se présente sous la forme suivante :

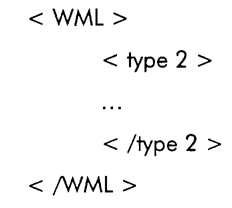

### Exemple 1 : mode navigateur préférentiel .

Un abonné, possédant une messagerie vocale, consulte en mode navigateur un service de gestion de cette messagerie accessible par le portail WAP de l'opérateur. Une page de données de service, comportant une instruction de sélection du mode navigateur, s'affiche alors par exemple sous la forme suivante :

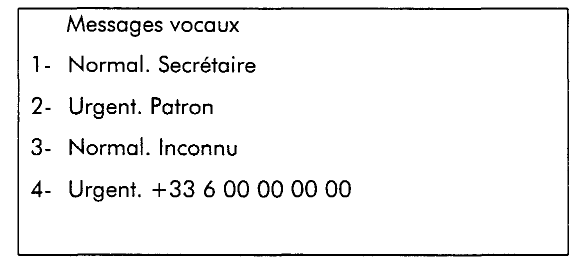

L'abonné choisi l'option « 2- Urgent. Patron » afin de consulter le message correspondant. Toutefois, grâce à l'instruction de sélection du mode navigateur, ce mode est maintenu ce qui permet par exemple, pendant l'écoute du message, l'affichage de la page de données de service suivante :

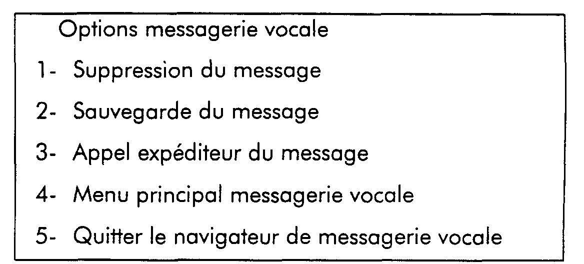

L'abonné choisi l'option « 1- Suppression du message » puis l'option « 4-Menu principal messagerie vocale ». L'écran affiche alors la page navigateur suivante :

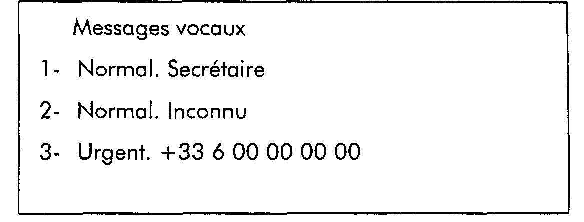

L'abonné peut alors choisir l'option « 3- Urgent. +33 6 00 00 00 00 » afin de consulter le message correspondant.

### Exemple 2 : mode appel téléphonique préférentiel .

Un abonné souhaite appeler un correspondant dont il ne connaît pas les coordonnées téléphoniques. Pour déterminer ces dernières, l'abonné consulte en mode navigateur un service de renseignements accessible par le portail WAP de l'opérateur. Une page de données de service, comportant une instruction de sélection du mode appel téléphonique, s'affiche alors par exemple sous la forme suivante :

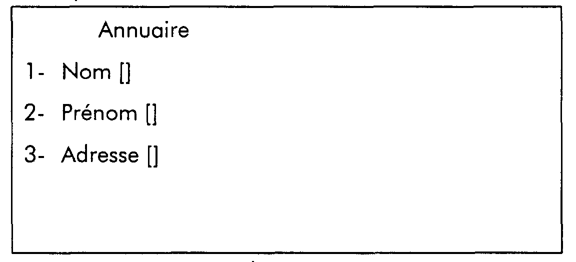

L'abonné saisit les données et valide son choix. L'écran affiche alors : 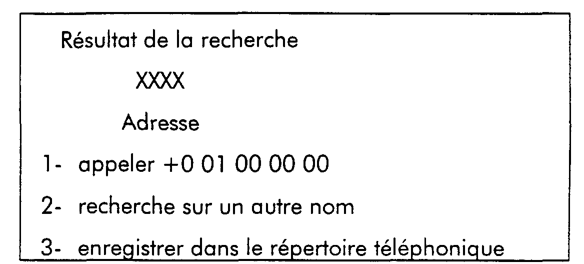 L'abonné choisi l'option « 1- appeler +0 01 00 00 00 » de façon à joindre son correspondant « XXXX », le terminal mobile fonctionnant dès lors dans le mode appel téléphonique préférentiel. L'écran du terminal mobile affiche les informations habituelles correspondant à ce mode fonctionnement de façon à proposer par un accès simple les fonctions habituelles de type appel téléphonique.

## Revendications

1. Procédé de gestion du fonctionnement d'un terminal mobile dans un réseau de télécommunication, du type dans lequel le terminal mobile est destiné à fonctionner sélectivement dans un mode appel téléphonique et dans un mode navigateur, et du type dans lequel des moyens d'affichage, portés par le terminal mobile ou raccordés à ce terminal mobile, sont susceptibles d'afficher une page de données de service mise en forme par une séquence d'instructions dans un langage adapté aux données de service, la page de données de service donnant accès à au moins un service, **caractérisé en ce que** l'on sélectionne un mode de fonctionnement du terminal mobile, dit mode préférentiel, pour la mise en oeuvre d'un service, en incorporant, dans la séquence d'instructions de la page de données de service donnant accès à ce service, une instruction de sélection du mode préférentiel.

2. Procédé selon la revendication 1, **caractérisé en ce que** le mode navigateur utilise le protocole d'application sans fil WAP (Wireless Application Protocol).

3. Procédé selon la revendication 1 ou 2, **caractérisé en ce que** le langage adapté aux données de service est de la famille du langage XML (eXtensible Markup Language), notamment le langage WML (Wireless Markup Language).

4. Procédé selon la revendication 1 ou 2, **caractérisé en ce que** le langage adapté aux données de service est le langage HTML (Hyper Text Markup Language) ou un langage dérivé de ce dernier.
